# EUROPÄISCHE PATENTSCHRIFT

(11) **EP 1 614 975 B1**
(45) Veröffentlichungstag und Bekanntmachung des Hinweises auf die Patenterteilung: **14.04.2010**
(21) Anmeldenummer: 05014258.7
(22) Anmeldetag: 30.06.2005
(51) Int. Cl.: F24F 11/00

(54) **Volumenstromregler, insbesondere für klima- und lüftungstechnische Anlagen**
Air flow controller, in particular for ventilation and/or air-conditioning devices
Régulateur de débit d'air, en particulier pour les dispositifs de ventilation et/ou climatisation

(30) Priorität: 10.07.2004 DE 202004010819 U
(43) Veröffentlichungstag der Anmeldung: 11.01.2006
(73) Patentinhaber: TROX GmbH, 47506 Neukirchen-Vluyn (DE)
(72) Erfinder: Baumeister, Gregor, 47802 Krefeld (DE); Walter, Siegfried, 47807 Krefeld (DE)
(74) Vertreter: DR. STARK & PARTNER

(56) Entgegenhaltungen:
- EP-A2- 0 889 291
- DE-A1- 4 424 652
- DE-C1- 19 807 889
- US-A- 4 838 483

## Beschreibung

Die Erfindung betrifft einen Volumenstromregler, insbesondere für klima- und lüftungstechnische Anlagen, mit einer Regelklappe, die im Inneren eines Strömungskanals auf einer quer zur Strömungsrichtung angeordneten und zumindest eine Wandung des Strömungskanals durchfassenden Welle schwenkbar gelagert ist, wobei zur Veränderung der Stellung der Regelklappe an dem aus dem Strömungskanal herausragenden Bereich der Welle ein Stelltrieb angreift.

Derartige Volumenstromregler sind in der Praxis mit einer in eine Gebäudeleittechnik integrierte Regeleinrichtung verbunden. Über einen Druckdifferenzsensor, der als separates Bauteil ausgebildet und in räumlichem Abstand zum Volumenstromregler angeordnet ist, wird eine Druckdifferenz bestimmt und hieraus ein Istwert ermittelt. Dieser wird mit einem hinterlegten Sollwert verglichen. Im Falle von Abweichungen erhält der Stelltrieb über eine Datenverbindung ein entsprechendes Signal.

Dokument EP 0 889 291 offenbart einen derartige elektronisch gesteuerten Volumen stromregler.

Nachteilig hierbei ist, dass der Einbau und auch die spätere Einstellung des Volumenstromreglers aufwendig ist, da neben dem eigentlichen Volumenstromregler auch diverse separate Bauteile montiert und diese dann miteinander verbunden und untereinander justiert werden müssen, wobei die über die Gebäudeleittechnik vorzunehmende Justierung im übrigen aufgrund der räumlichen Trennung der einzelnen Bestandteile aufwendig und zeitintensiv ist.

Aufgabe der Erfindung ist es daher, einen bekannten Volumenstromregler so zu verbessern, dass die vorbeschriebenen Nachteile vermieden werden.

Diese Aufgabe wird dadurch gelöst, dass eine mit dem Stelltrieb verbundene und mit diesem in einem gemeinsamen Gehäuse angeordnete Regeleinrichtung vorgesehen ist, und dass zumindest ein in den Strömungskanal hineinragender und mit der Regeleinrichtung verbundener Drucksensor vorgesehen ist, wobei an der Regeleinrichtung zumindest ein Mittel zum Einstellen eines minimal und/oder eines maximal zulässigen Volumenstroms im Strömungskanal vorgesehen ist. Der erfindungsgemäße Volumenstromregler zeichnet sich durch eine äußerst kompakte Bauweise aus, da sämtliche Bauteile in dem Volumenstromregler selbst vorgesehen sind, so dass der Volumenstromregler werkseitig komplett montiert werden kann. Auf der Baustelle selbst erfolgt dann lediglich der Anschluss an einen bauseitigen Strömungskanal sowie an ein Stromnetz. Danach können an dem Volumenstromregler selbst auf einfache Weise der minimal und der maximale zulässige Volumenstrom über das(die) Mittel eingestellt werden.

Im Betrieb wird über den Drucksensor eine Druckdifferenz ermittelt, die entweder als analoges oder aber nach Umwandlung als digitales Signal an die Regeleinrichtung weitergeleitet wird. Weicht der gemessene Istwert von einem in der Regeleinrichtung hinterlegten Sollwert ab, wird von der Regeleinrichtung an den Stelltrieb ein entsprechendes Signal weitergegeben und so die Regelklappenstellung verändert.

Es kann leidlich nur ein Mittel vorgesehen sein, über das sowohl der minimale als auch der maximale Volumenstrom einstellbar ist. Es ist aber auch durchaus möglich, dass zwei getrennte Mittel vorgesehen sind, so dass über das eine Mittel die Einstellung des minimalen Volumenstroms und über das andere Mittel die Einstellung des maximalen Volumenstroms erfolgt.

Dabei sind die Mittel vorzugsweise leicht zugänglich auf der Außenseite der Regeleinrichtung oder des Stelltriebes angeordnet, so dass eine Einstellung problemlos möglich ist.

Zumindest ein Mittel zum Einstellen des zulässigen Volumenstroms kann als Potentiometer ausgebildet sein. Es sind aber auch andere analog arbeitende Mittel oder Mittel denkbar, die auf digitale Weise eine Einstellung erlauben.

Damit der Stelltrieb nur in einer Position montierbar ist, können der Stelltrieb und das aus dem Strömungskanal herausragende Ende der Welle über eine formschlüssige und nur eine Montagesituation erlaubende formschlüssige Verbindung mit einander verbunden sein. Auf diese Weise sind auch der Drehwinkel und die Drehrichtung festgelegt. Für eine schnelle Montage bietet sich beispielsweise eine einfache Steckverbindung an. Es ist aber durchaus möglich, dass der Stelltrieb mit dem Strömungskanal verschraubt wird.

Dabei kann zumindest das mit dem Stelltrieb verbundene Ende der Welle einen runden Querschnitt mit einer seitlichen Abflachung und der Stelltrieb eine mit dem Ende korrespondierende Aufnahmeöffnung aufweisen. Andere Querschnittsformen, die lediglich eine Montageposition erlauben, sind durchaus möglich.

Als Verdrehsicherung kann an dem Stelltrieb, vorzugsweise an der dem Strömungskanal zugewandten Seite des Stelltriebs, ein in eine entsprechende Öffnung in der Wandung des Strömungskanals zumindest teilweise eingreifender Stift vorgesehen sein. Bei Einführen des aus dem Strömungskanal herausragenden Endes der Welle in die Aufnahmeöffnung des Stelltriebs wird gleichzeitig der Stift in die Wandung des Strömungskanals eingeführt, so dass hierdurch der Stelltrieb an zwei Punkten mit dem Strömungskanal verbunden ist. Um ein Lösen zu verhindern, kann der Stift beispielsweise endseitig eine Rastnase aufweisen, die einen korrespondierenden strömungskanalseitigen Rastvorsprung hintergreift.

Zur beabstandeten Anordnung des Stelltriebs von dem Strömungskanal im montierten Zustand kann auf der dem Strömungskanal zugewandten Seite des Stelltriebs ein vorzugsweise elastisches Abstandselement, insbesondere ein Elastomer, vorgesehen sein. Insbesondere bei elastischer Ausbildung verhindert das Abstandselement auch das Auftreten von Vibrationen.

Dabei bietet sich an, wenn zumindest im Bereich des Stiftes ein Abstandselement vorgesehen ist. Sofern die Dicke des Abstandselementes in etwa dem verbleibenden Zwischenraum zwischen dem Stelltrieb und dem Strömungskanal im aufgesteckten Zustand im Bereich der Welle entspricht, wird auf diese Weise der Stelltrieb an zwei Stellen in gleichem Maße von der Wandung beabstandet.

Die Regeleinrichtung kann auch mit einem externen Raumtemperatursensor verbunden sein. Über den Raumtemperatursensor wird die Raumtemperatur ermittelt und ein entsprechendes Signal an die Regeleinrichtung weitergeleitet. Bei Regelungsbedarf wird dann im Rahmen der Voreinstellung des minimalen und maximalen Volumenstroms die Stellung der Regelklappe in der gewünschten Richtung verändert.

Es ist durchaus möglich, dass zur zusätzlichen externen Regelung des Volumenstromreglers die Regeleinrichtung mit einer externen Steuerung, insbesondere einer Gebäudeleittechnik, verbunden ist. Hierdurch kann der Volumenstromregler zusätzlich extern innerhalb des vorher durch das(die) Mittel eingestellten minimalen und maximalen Regelbereichs geregelt werden.

Die Regeleinrichtung kann an ein Bussystem angeschlossen sein. In diesem Fall ist in der Regeleinrichtung ein LON- oder ASI-Chip vorgesehen.

Im Folgenden wird ein in der Zeichnung dargestelltes Ausführungsbeispiel der Erfindung erläutert. Es zeigen:
- Fig. 1: einen teilweise aufgeschnittenen Volumenstromregler und
- Fig. 2: einen Teilschnitt durch den Gegenstand nach Fig. 1 in Richtung II-II.

In beiden Figuren werden für gleiche bzw. gleichartige Bauteile übereinstimmende Bezugszeichen verwendet.

Der in den Figuren dargestellte Volumenstromregler 1 weist einen Strömungskanal 2 mit einer umlaufenden Wandung 3, die beispielsweise rund oder eckig ausgebildet sein kann, auf. Im Bereich der beiden Enden 4, 5 des Strömungskanals 2 sind Sicken 6 vorgesehen. Mit den beiden Enden 4, 5 ist der Volumenstromregler 1 mit einer nicht dargestellten klimatechnischen Anlage verbunden.

Innerhalb des Strömungskanals 2 ist auf einer quer zur Strömungsrichtung 7 angeordneten und zumindest eine die Wandung 3 des Strömungskanals 2 durchfassenden Welle 8 eine Regelklappe 9 schwenkbar gelagert, wobei randseitig die Regelklappe 9 eine Dichtlippe 10 aufweist.

In der dargestellten Position befindet sich die Regelklappe 9 in einer Zwischenposition zwischen der Offen- und der Schließstellung. In der Offenstellung ist die Regelklappe 9 etwa parallel zur Strömungsrichtung 7 ausgerichtet.

Außenseitig ist an dem Volumenstromregler 1 ein Stelltrieb 11 mit einer integrierten Regeleinrichtung 12 montiert. Der Stelltrieb 11 weist eine Aufnahmeöffnung 13 auf, die auf das aus dem Strömungskanal 2 herausragende Ende der Welle 8 aufgesteckt wird. Wie deutlich zu erkennen ist, ist die Welle 8 rund und weist eine seitliche Abflachung 14 auf, so dass der Stelltrieb 11 nur in einer Montagesituation eingebaut werden kann. Die Abflachung 14 überträgt darüber hinaus die Drehbewegung des Stelltriebs 11 bei Betätigung auf die Welle 8.

Zum Verhindern eines Verdrehens des Stelltriebs 11 gegenüber dem Strömungskanal 2 ist auf der dem Strömungskanal 2 zugewandten Seite des Stelltriebs 11 ein Stift 15 vorgesehen, der in eine entsprechende Öffnung 16 in der Wandung 3 des Strömungskanals 2 eingreift. Zwischen der dem Strömungskanal 2 zugewandten Seite des Stelltriebs 11 und der Wandung 3 des Strömungskanals 2 ist im Bereich des Stiftes 15 ein vorzugsweise elastisches Abstandselement 17, wie z. B. ein Elastomer, vorgesehen. Die Dicke des Abstandselements 17 entspricht dabei in etwa dem Abstand zwischen dem Strömungskanal 2 und dem Stelltrieb 11 im Bereich der Welle 8, wenn der Stelltrieb 11 vollständig auf die Welle 8 aufgesteckt worden ist.

In dem dargestellten Ausführungsbeispiel sind als Drucksensor 18 zwei rechtwinklig zueinander angeordnete Rohre 19 in dem Strömungskanal 2 vorgesehen. Die Rohre 19 weisen nicht dargestellte Ausnehmungen über ihre Länge auf. Selbstverständlich sind auch andere Arten von Drucksensoren 18 denkbar.

Über Leitungen 20 sind die Rohre 19 des Drucksensors 18 mit der Regeleinrichtung 12 verbunden. Die über die Rohre 19 ermittelte Druckdifferenz wird in der Regeleinrichtung 12 in ein Spannungssignal umgesetzt, wobei dieser so ermittelte Istwert dann mit einem hinterlegten Sollwert verglichen und bei Bedarf ein entsprechendes Signal an den Stelltrieb 11 zur Veränderung der Stellung der Regelklappe 9 ausgesandt wird.

Zur Einstellung des minimalen und maximalen Volumenstroms sind zwei als Mittel 21 ausgebildete Potentiometer vorgesehen. Durch die außenseitig aufgebrachte Skalierung können der minimale und der maximale Volumenstrom über je einen Potentiometer problemlos eingestellt werden.

Über Klemmen 22 ist der Volumenstromregler 1 an ein Stromnetz, gegebenenfalls auch an eine gebäudeseitige Gebäudeleittechnik sowie an einen Raumtemperatursensor, angeschlossen. Eine außenseitige Kontrollleuchte 23 signalisiert die Betriebsweise.

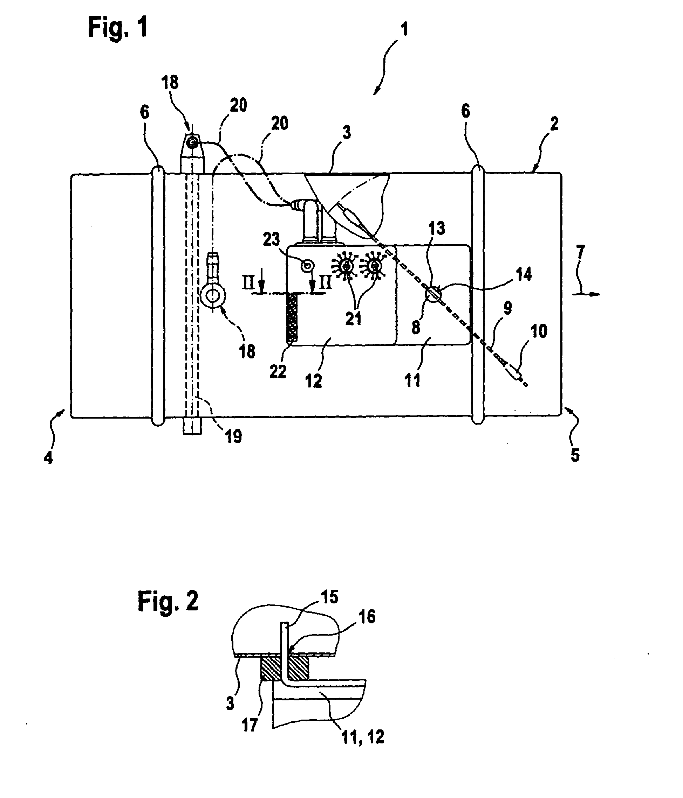

Wie Fig. 1 zu entnehmen ist, ist der erfindungsgemäße Volumenstromregler 1 äußerst kompakt, da Regelklappe 9, Stelltrieb 11, Regeleinrichtung 12 und Drucksensor 18 auf geringstem Raum angeordnet sind und die Montage werkseitig bereits vorgenommen werden kann. Auf der Baustelle selbst muss der Volumenstromregler 1 lediglich mit seinen beiden Enden 4, 5 mit dem gebäudeseitigen Klimatisierungssystem verbunden sowie an ein Stromnetz angeschlossen werden.

## Patentansprüche

1. Volumenstromregler (1), insbesondere für klima- und lüftungstechnische Anlagen, mit einer Regelklappe (9), die im Inneren eines Strömungskanals (2) auf einer quer zur Strömungsrichtung (7) angeordneten und zumindest eine Wandung (3) des Strömungskanals (2) durchfassenden Welle (8) schwenkbar gelagert ist, wobei zur Veränderung der Stellung der Regelklappe (9) an dem aus dem Strömungskanal (2) herausragenden Bereich der Welle (8) ein Stelltrieb (11) angreift, **dadurch gekennzeichnet, dass** eine mit dem Stelltrieb (11) verbundene und mit diesem in einem gemeinsamen Gehäuse angeordnete Regeleinrichtung (12) vorgesehen ist, und dass zumindest ein in den Strömungskanal (2) hineinragender und mit der Regeleinrichtung (12) verbundener Drucksensor (18) vorgesehen ist, wobei an der Regeleinrichtung (12) zumindest ein Mittel (21) zum Einstellen eines minimal und/oder eines maximal zulässigen Volumenstroms im Strömungskanal (2) vorgesehen ist und dass zumindest ein Mittel (21) zum Einstellen des zulässigen Volumenstroms als Potentiometer ausgebildet ist.

2. Volumenstromregler (1) nach Anspruch 1, **dadurch gekennzeichnet, dass** der Stelltrieb (11) und das aus dem Strömungskanal (2) herausragende Ende der Welle (8) über eine formschlüssige und nur eine Montagesituation erlaubende formschlüssige Verbindung mit einander verbunden sind.

3. Volumenstromregler (1) nach Anspruch 2, **dadurch gekennzeichnet, dass** zumindest das mit dem Stelltrieb (11) verbundene Ende der Welle (8) einen runden Querschnitt mit einer seitlichen Abflachung (14) und der Stelltrieb (11) eine mit dem Ende korrespondierende Aufnahmeöffnung (13) aufweist.

4. Volumenstromregler (1) nach einem der Ansprüche 1 bis 3, **dadurch gekennzeichnet, dass** als Verdrehsicherung an dem Stelltrieb (11), vorzugsweise an der dem Strömungskanal (2) zugewandten Seite des Stelltriebs (11), ein in eine entsprechende Öffnung (16) in der Wandung (3) des Strömungskanals (2) zumindest teilweise eingreifender Stift (15) vorgesehen ist.

5. Volumenstromregler (1) nach einem der Ansprüche 1 bis 4, **dadurch gekennzeichnet, dass** zur beabstandeten Anordnung des Stelltriebs (11) von dem Strömungskanal (2) im montierten Zustand auf der dem Strömungskanal (2) zugewandten Seite des Stelltriebs (11) ein vorzugsweise elastisches Abstandselement (17), insbesondere ein Elastomer, vorgesehen ist.

6. Volumenstromregler (1) nach einem der Ansprüche 1 bis 5, **dadurch gekennzeichnet, dass** die Regeleinrichtung (12) mit einem externen Raumtemperatursensor verbunden ist.

7. Volumenstromregler (1) nach einem der Ansprüche 1 bis 6, **dadurch gekennzeichnet, dass** zur externen Regelung des Volumenstromreglers (1) die Regeleinrichtung (12) mit einer externen Steuerung, insbesondere einer Gebäudeleittechnik, verbunden ist.

8. Volumenstromregler (9) nach einem der Ansprüche 1 bis 7, **dadurch gekennzeichnet, dass** die Regeleinrichtung (12) an ein Bussystem angeschlossen ist.

## Claims

1. Volume flow controller (1), in particular for climate-control and ventilation systems, said volume flow controller having a control flap (9), which is pivotably mounted in the interior of a flow channel (2) on a shaft (8) that is located transversely relative to the direction of flow (7) and extends through at least one wall (3) of the flow channel (2), wherein to change the position of the control flap (9), an actuating drive (11) engages the region of the shaft (8) protruding out of the flow channel (2), **characterized in that** a control device (12) is provided connected to the actuating drive (11) and arranged with said actuating drive in a common housing, and **in that** there is provided at least one pressure sensor (18) that protrudes into the flow channel (2) and is connected to the control device (12), wherein at least one means (21) for adjusting a minimum and/or a maximum admissible volume flow in the flow channel (2) is provided at the control device (12) and **in that** at least one means (21) for adjusting the admissible volume flow is realized as a potentiometer.

2. Volume flow controller (1) according to Claim 1, **characterized in that** the actuating drive (11) and the end of the shaft (8) protruding out of the flow channel (2) are connected to each other by means of a positive locking connection and a positive locking connection that only allows for one assembly situation.

3. Volume flow controller(1) according to Claim 2, **characterized in that** at least the end of the shaft (8) connected to the actuating drive (11) has a round cross section with a lateral flattening (14) and the actuating drive (11) has an accommodating opening (13) corresponding to the end.

4. Volume flow controller (1) according to one of Claims 1 to 3, **characterized in that** as protection against rotation, a pin (15) is provided at the actuating drive (11), preferably on the side of the actuating drive (11) facing the flow channel (2), engaging at least partially in a corresponding opening (16) in the wall (3) of the flow channel (2).

5. Volume flow controller(1) according to one of Claims 1 to 4, **characterized in that** a preferably resilient spacing element (17), in particular an elastomer, is provided to arrange the actuating drive (11) at a spacing from the flow channel (2) in the mounted state on the side of the actuating drive (11) facing the flow channel (2).

6. Volume flow controller (1) according to one of Claims 1 to 5, **characterized in that** the control device (12) is connected to an external ambient temperature sensor.

7. Volume flow controller(1) according to one of Claims 1 to 6, **characterized in that** the control device (12) is connected to an external control means, in particular to a building services management system, to control the volume flow controller(1) externally.

8. Volume flow controller (9) according to one of Claims 1 to 7, **characterized in that** the control device (12) is connected to a bus system.

## Revendications

1. Régulateur de débit volumique (1), en particulier pour dispositifs de climatisation et de ventilation, avec un volet régulateur (9) qui est monté pivotant à l'intérieur d'un canal d'écoulement (2) sur un arbre (8) disposé transversalement à la direction d'écoulement (7) et traversant au moins une paroi (3) du canal d'écoulement (2), la position du volet régulateur (9) pouvant être modifiée par un mécanisme d'entraînement (11) agissant sur la partie de l'arbre (8) qui dépasse du canal d'écoulement (2), **caractérisé en ce qu'**il est prévu un dispositif de réglage (12) relié au mécanisme d'entraînement (11) et disposé avec celui-ci dans un boîtier commun, qu'il est prévu au moins un capteur de pression (18) faisant saillie dans le canal d'écoulement (2) et relié au dispositif de réglage (12), au moins un moyen (21) pour régler un débit volumique minimal et/ou maximal admissible dans le canal d'écoulement (2) étant prévu sur le dispositif de réglage (12), et qu'au moins un moyen (21) pour régler le débit volumique admissible est réalisé sous la forme d'un potentiomètre.

2. Régulateur de débit volumique (1) selon la revendication 1, **caractérisé en ce que** le mécanisme d'entraînement (11) et l'extrémité de l'arbre (8) dépassant du canal d'écoulement (2) sont reliés ensemble par une liaison par complémentarité de formes qui n'autorise qu'une seule situation de montage.

3. Régulateur de débit volumique (1) selon la revendication 2, **caractérisé en ce qu'**au moins l'extrémité de l'arbre (8) reliée au mécanisme d'entraînement (11) présente une section ronde avec un méplat (14) latéral et le mécanisme d'entraînement (11) une ouverture de réception (13) correspondante.

4. Régulateur de débit volumique (1) selon une des revendications 1 à 3, **caractérisé en ce qu'**il est prévu comme moyen de blocage en rotation sur le mécanisme d'entraînement (11), de préférence du côté du mécanisme d'entraînement (11) tourné vers le canal d'écoulement (2), une broche (15) s'engageant au moins partiellement dans une ouverture (16) correspondante de la paroi (3) du canal d'écoulement (2).

5. Régulateur de débit volumique (1) selon une des revendications 1 à 4, **caractérisé en ce qu'**il est prévu pour la disposition du mécanisme d'entraînement (11) à distance du canal d'écoulement (2) à l'état monté, du côté du mécanisme d'entraînement (11) tourné vers le canal d'écoulement (2), un élément d'écartement élastique (11), en particulier un élastomère.

6. Régulateur de débit volumique (1) selon une des revendications 1 à 5, **caractérisé en ce que** le dispositif de réglage (12) est relié à un capteur externe de température ambiante.

7. Régulateur de débit volumique (1) selon une des revendications 1 à 6, **caractérisé en ce que** pour le réglage externe du régulateur de débit volumique (1), le dispositif de réglage (12) est relié à une commande externe, en particulier un système de gestion technique des bâtiments.

8. Régulateur de débit volumique (1) selon une des revendications 1 à 7, **caractérisé en ce que** le dispositif de réglage (12) est connecté à un système de bus.
